# DEMANDE DE BREVET EUROPEEN

(11) **EP 1 316 907 A2**
(43) Date de publication de la demande: **04.06.2003**
(21) Numéro de dépôt: 02079851.8
(22) Date de dépôt: 21.11.2002
(51) Int. Cl.: G06F 17/60, G09B 7/02

(54) **Système pour l'apprentissage d'un appareil muni d'une pluralité de fonctionnalités, appareil impliqué dans un tel sytème et procédé mis en oeuvre dans un tel système**

(30) Priorité: 30.11.2001 FR 0115505
(71) Demandeur: Koninklijke Philips Electronics N.V., 5621 BA Eindhoven (NL)
(72) Inventeur: Oudejans, Sandra, 75008 Paris (FR)
(74) Mandataire: Chaffraix, Jean

(57) **Abrégé**

Ce système est destiné à l'apprentissage d'un appareil (12) muni d'une pluralité de fonctionnalités que les utilisateurs ont du mal à explorer. Ce système est formé d'un dispositif serveur (5) pour fournir, via internet (10), des questions concernant les possibilités dudit appareil. Chaque bonne réponse donne l'attribution de points et permet de continuer. Les utilisateurs qui obtiennent les plus gros scores se voient récompensés. Ainsi, grâce à ce système les utilisateurs acquièrent une bonne connaissance de l'appareil ce qui les fidélisent. En outre, en analysant certaines réponses, le fabriquant sait les fonctionnalités qu'il a à développer.

Application : Apprentissage d'appareils aux fonctionnalités complexes.

## Description

L'invention concerne un système pour l'apprentissage d'un appareil muni d'une pluralité de fonctionnalités.

L'invention concerne aussi un appareil impliqué dans un tel système et un procédé pour mettre en valeur auprès d'utilisateurs un tel appareil.

L'invention concerne aussi un procédé pour mettre en valeur auprès d'utilisateurs un appareil présentant une pluralité de fonctionnalités.

L'invention trouve d'importantes applications notamment en ce qui concerne le. développement d'un produit et sa mise en valeur auprès de la clientèle.

L'invention se rapporte notamment à des appareils présentant un fonctionnement de type plutôt complexe, comme par exemple un appareil de radiotéléphonie mobile. Bien souvent les utilisateurs n'utilisent qu'une petite partie des possibilités de leur appareil. En outre, il est important pour le fabriquant de ces appareils de savoir quelle fonctionnalité est bien comprise et si elle est appréciée.

Dans le document de brevet PCT WO 01/35687, on propose des moyens pour faciliter l'utilisateur dans ses tentatives d'accès aux différentes fonctionnalités de l'appareil, cependant cela impose d'utiliser toutes sortes de dispositifs.

La présente invention propose un système du genre mentionné dans le préambule qui se différentie dans une large mesure de l'art antérieur précité en incitant l'utilisateur à apprendre de lui-même les fonctionnalités de son appareil.

Pour cela, un tel système est remarquable en ce qu'il est formé d'un dispositif serveur pour fournir des questions concernant les possibilités dudit appareil, pour attribuer des points à chaque utilisateur du dispositif serveur et pour déterminer une récompense aux utilisateurs ayant le plus de points.

Un procédé pour mettre en valeur auprès d'utilisateurs un appareil présentant une pluralité de fonctionnalités est remarquable en ce qu'il comporte les étapes suivantes :
- mise en place sur un serveur de type internet notamment, d'un questionnaire concernant l'utilisation de l'appareil,
- établissement d'un score pour les réponses correctes aux questions dudit questionnaire,
- récompense des meilleurs utilisateurs, basée sur ledit score.

La description suivante, faite en regard des dessins ci-annexés, le tout donné à titre d'exemples non limitatifs fera bien comprendre comment l'invention peut être réalisée.

### Sur les dessins :

La figure 1 montre un système conforme à l'invention .
La figure 2 montre un organigramme mis en oeuvre dans le système conforme à l'invention.
La figure 3 montre un écran qui montre une mesure préconisée par l'invention.
La figure 4 montre un autre mode de réalisation de l'invention

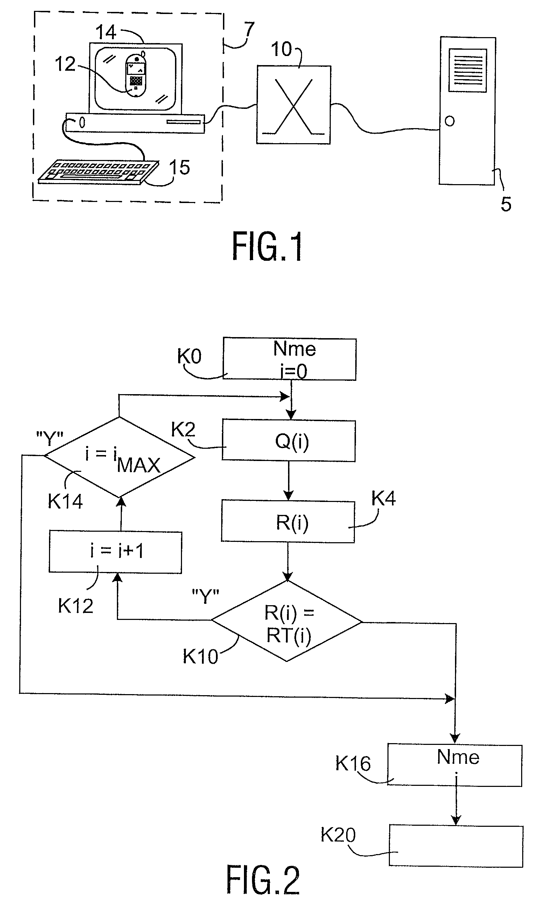

La figure 1 montre le système conforme à l'invention. Il se compose d'un dispositif serveur 5 avec lequel une station terminale 7 communique. Ce serveur 5 propose un questionnaire, via le réseau internet 10, concernant un appareil 12 qui peut être montré sur l'écran 14 de la station terminale 7. Cet appareil 12 est dans le cadre de l'exemple un radiotéléphone mobile du type cellulaire. Le questionnaire que l'utilisateur a sollicité depuis la station terminale 7, comporte des questions auxquelles les réponses peuvent être effectuées au moyen du clavier 15 ou de la souris (non représentée). Les questions vont concerner le fonctionnement de l'appareil et les fonctionnalités dont il est pourvu. Pour que l'utilisateur fasse des efforts pour mieux connaître son appareil, ce questionnaire s'apparente à un jeu avec des récompenses qui sont prévues pour ceux qui acquièrent les meilleures connaissances possibles de l'appareil.

La figure 2 montre, au moyen d'un organigramme, comment peut être organisé ce jeu. La case K0 est une étape d'initialisation. Durant cette étape on essaye de définir, entre autres, le profile de l'utilisateur : son nom "Nme", sa profession, dans quelle branche de l'industrie il travaille...etc. Durant cette étape, on initialise son score au jeu-questionnaire qu'on lui propose. La case K2 correspond à la soumission d'une question Q(i) et la case K4 à la réponse R(i) faite par l'utilisateur. Cette réponse est testée avec la réponse type RT(i) à la case K10. Si la réponse est correcte, alors on retourne à la case K2 par l'intermédiaire des cases K12 et K14. La case K12 a pour effet d'incrémenter le numéro "i" de la question et la case K14 est un test sur la fin du questionnaire. Si le test est fini, on va donc à la case K16. Si la réponse est négative au test de la case K10, on va aussi à la case K16. A cette case K16, on enregistre le nom de l'utilisateur "Nme" et le numéro de la dernière question à laquelle il a répondu. La case K20 représente le classement de l'utilisateur parmi d'autres. Si son score est bon (s'il a répondu à beaucoup de questions), une récompense peut lui être accordée soit sous forme d'argent, soit en lui accordant un crédit de temps pour l'usage de son radiotéléphone. Il va de soi que l'utilisateur attiré par la récompense va aller feuilleter le mode d'emploi de l'appareil en vue de répondre correctement au questionnaire.

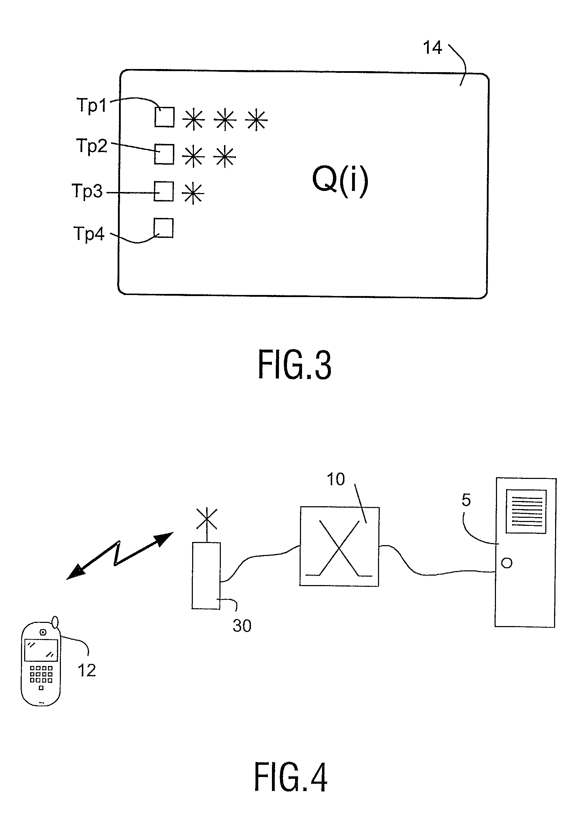

Pour déterminer les fonctionnalités qui intéressent l'utilisateur on ajoute des indicateurs aux questions intéressant les fonctionnalités, comme cela est montré à la figure 3. Ces indicateurs sont constitués par des cases à cocher Tp1 à Tp4 montrées sur l'écran 14 relativement à une question Q(i). En regard de ces cases Tp1 à Tp4 on a porté des astérisques * dont le nombre est censé représenter l'intérêt de la question. L'analyse de ces réponses entrera en ligne de compte pour le développement d'un futur appareil.

La figure 4, sur laquelle les éléments communs à ceux des figures précédentes portent les mêmes références, montre un autre exemple de réalisation de l'invention. Sur cet exemple, le réseau internet est accessible par le système de radio-mobile connu sous le nom de WAP. Un circuit d'interface 30 permet de recueillir et de transmettre des informations à l'appareil de radio-mobile 12 qui ainsi permet d'accéder directement au jeu-questionnaire.

On se rend compte que l'utilisateur qui a consacré du temps à ce questionnaire-jeu sera fidèle à l'appareil et sera tenté d'acheté les nouvelles versions de cet appareil dès qu'elles sortiront.

## Revendications

1. Système pour l'apprentissage d'un appareil muni d'une pluralité de fonctionnalités, **caractérisé en ce qu'**il est formé d'un dispositif serveur pour fournir des questions concernant les possibilités dudit appareil, pour attribuer des points à chaque utilisateur du dispositif serveur et pour déterminer une récompense aux utilisateurs ayant le plus de points.

2. Système selon la revendication 1 pour lequel ledit appareil est muni de moyens de télécommunications, **caractérisé en ce que** lesdits moyens sont utilisés pour une connexion avec ledit dispositif serveur.

3. Système selon la revendication 1 ou 2, **caractérisé en ce que** le dispositif serveur comporte des moyens de profiles pour déterminer le profile de l'utilisateur.

4. Système selon l'une des revendications 1 à 3, **caractérisé en ce que** le dispositif serveur comporte des moyens de statistiques pour déterminer les fonctionnalités préférées des utilisateurs en vue de les développer sur un futur appareil.

5. Système selon la revendication 4, **caractérisé en ce que** pour des fonctionnalités, un critère d'intérêt est associé.

6. Appareil utilisé dans un système selon l'une des revendications 1 à 5, **caractérisé en ce qu'**il est muni de fonctionnalités destinées à être analysées par ledit système.

7. Appareil dont les fonctionnalités sont définies par un système selon l'une des revendications 1 à 5, **caractérisé en ce que** ces fonctionnalités sont élaborées à partir de fonctionnalités considérées comme importantes par l'utilisateur.
